# EUROPÄISCHE PATENTSCHRIFT

(11) **EP 1 211 154 B1**
(45) Veröffentlichungstag und Bekanntmachung des Hinweises auf die Patenterteilung: **11.05.2005**
(21) Anmeldenummer: 01127430.5
(22) Anmeldetag: 26.11.2001
(51) Int. Cl.: B62D 1/06

(54) **Verfahren zum Herstellen eines Fahrzeuglenkrads und Fahrzeuglenkrad**
Method of manufacturing a steering wheel and steering wheel
Procédé de fabrication d'un volant de direction et volant de direction

(30) Priorität: 29.11.2000 DE 10059133
(43) Veröffentlichungstag der Anmeldung: 05.06.2002
(73) Patentinhaber: TRW Automotive Safety Systems GmbH, 63743 Aschaffenburg (DE)
(72) Erfinder: Miltenberger, Michael, 63150 Heusenstamm (DE)
(74) Vertreter: Kitzhofer, Thomas, Dipl.-Ing.

(56) Entgegenhaltungen:
- EP-A- 0 050 309
- DE-U- 1 834 357
- GB-A- 980 673
- US-A- 3 576 139

## Beschreibung

Die Erfindung betrifft ein Verfahren zum Herstellen eines Fahrzeuglenkrads sowie ein Fahrzeuglenkrad gemäß dem Oberbegriff des Anspruchs 9.

Fahrzeuglenkräder haben üblicherweise ein Skelett aus Metall, welches im Bereich des Lenkradkranzes und der Speichen umschäumt ist. Das Umschäumen ist aufwendig und bedarf exakter Schäumformen. Darüber hinaus ist eine Nacharbeit des umschäumten Skelettes erforderlich.

Aus der DE-AS 1 912 534 ist zwar ein Lenkradskelett dargestellt, welches nicht umschäumt wird, sondern mit einer dicken Gummiauflage im Bereich des Kranzes versehen ist. Das Aufbringen und das Fertigen dieser dicken, im Querschnitt profilierten Gummiauflage sind aber aufwendig.

In der gattungsbildenden EP-A-0 050 309 ist ein Lenkrad beschrieben, bei dem das den Lenkradkranz bildende Skelett auf der Unterseite mit Ausnehmungen versehen ist. Das Skelett ist mit einer Umschaümung, die außenseitig mit Leder überzogen sein kann, verkleidet. Das Skelett kann einstückig durch Gießen gefertigt werden.

Aufgabe der Erfindung ist es, ein Verfahren zu schaffen, welches die Herstellung von preisgünstigen Lenkrädern erlaubt, die insbesondere haptisch nach wie vor angenehm für den Fahrer zu greifen sind. Ferner soll ein diese Vorteile bietendes Fahrzeuglenkrad kreiert werden.

Die erstgenannte Aufgabe wird durch ein Verfahren gemäß Anspruch 1 gelöst.

Die oben genannte zweite Aufgabe, die Herstellung eines Fahrzeuglenkrads, wird bei einem Fahrzeuglenkrad der eingangs genannten Art durch die Merkmale des Anspruchs 9 gelöst.

Beim erfindungsgemäßen Verfahren und dem erfindungsgemäßen Lenkrad ist kein Umschäumen des Lenkradskelettes mehr vorgesehen. Vielmehr wird der Lenkradkranz mit dem Weichschaum bezogen, an den außenseitig wiederum ein Leder angrenzt. Der Weichschaum gibt dem Lenkradkranz die erforderliche weiche, aber dennoch griffeste Haptik. Üblicherweise ist der Weichschaum aus einer ebenen, dünnen Weichschaumlage ausgestanzt, er ist also nicht wie eine Schale vorgeformt, was die Herstellung des Weichschaums verteuern würde.

Der Lenkradkranz definiert beim erfindungsgemäßen Lenkrad die Außengeometrie des mit Leder und Weichschaum bezogenen Kranzes, was im Stand der Technik nicht vorgesehen ist. Im Stand der Technik ist vielmehr die Umschäumung oder sind die Schalen, die am Skelett befestigt sind, der Teil bzw. diejenigen Teile, die die Außengeometrie des Lenkradkranzes bei fertiggestelltem Lenkrad definieren. Da beim erfindungsgemäßen Lenkrad aber der Lenkradkranz, d.h. der den Lenkradkranz bildende Ring des Skelettes, die Außengeometrie definiert, ist er wesentlich dicker als im Stand der Technik, denn es müssen ja nur noch die dünne Zwischenlage aus Weichschaum und das Leder aufgeklebt werden.

Um das Gewicht des Lenkradkranzes und damit die Vibrationsneigung des Lenkradkranzes zu reduzieren und um über die Variation des Gewichts die Vibrationsneigung verändern zu können, ist dieser gemäß der bevorzugten Ausführungsform mit Ausnehmungen versehen, z.B. an der Unterseite oder an der Unterseite und der gegenüberliegenden Oberseite. Die Zwischenlage überbrückt die Ausnehmungen derart und die Ausnehmungen sind so schmal, daß sie von außen nicht mehr mit der Hand ertastbar sind.

Das Lenkradskelett ist vorzugsweise im Aluminium- oder Magnesium-Druckgußverfahren hergestellt, welches die erforderlichen filigranen Formen möglich macht.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen Querschnitt durch eine rechte Hälfte eines erfindungsgemäßen Fahrzeuglenkrads, welches durch das erfindungsgemäße Verfahren hergestellt wurde,
- Figur 2 einen Querschnitt durch einen Lenkradkranz gemäß einer zweiten Ausführungsform des erfindungsgemäßen Lenkrads,
- Figur 3 einen Querschnitt durch den Lenkradkranz gemäß einer dritten Ausführungsform des erfindungsgemäßen Lenkrads,
- Figur 4 einen Querschnitt durch einen Lenkradkranz-Rohling für ein Lenkrad gemäß der dritten Ausführungsform,
- Figur 5 einen Querschnitt durch den Lenkradkranz gemäß einer vierten Ausführungsform des erfindungsgemäßen Lenkrads,
- Figur 6 eine abgebrochene Unteransicht eines Lenkradkranz-Rohlings gemäß einer fünften Ausführungform des erfindungsgemäßen Lenkrads, und
- Figur 7 eine abgebrochene Unteransicht eines Lenkradkranz-Rohlings gemäß einer sechsten Ausführungform des erfindungsgemäßen Lenkrads.

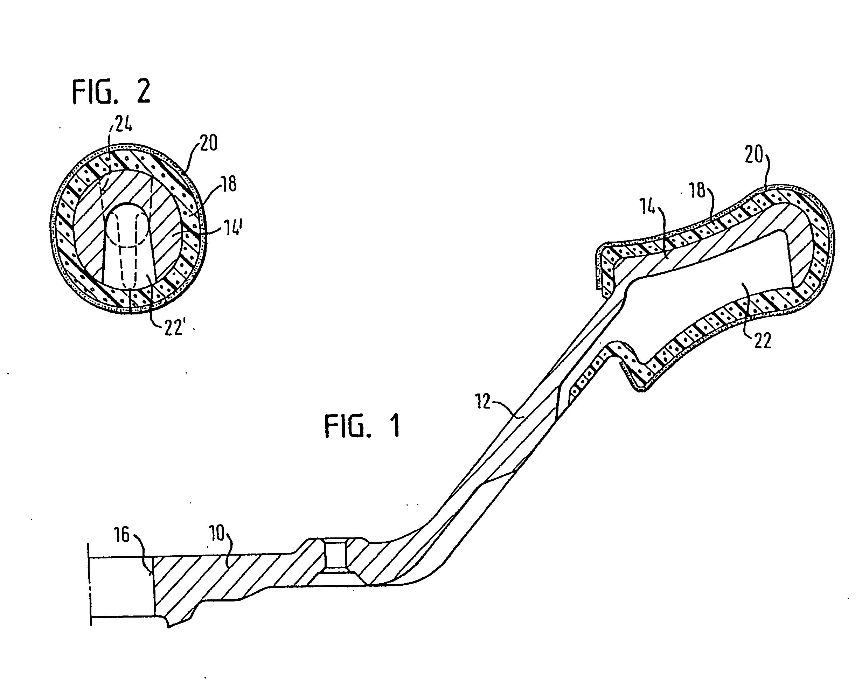

In Figur 1 ist ein Fahrzeuglenkrad dargestellt, welches ein einstückig durch Druckgießen oder Spritzen hergestelltes Skelett hat, das aus im wesentlichen drei Abschnitten besteht, nämlich einer Nabe 10, mehreren Speichen 12, von denen nur eine Speiche dargestellt ist, und einem in Umfangsrichtung durchgehenden Lenkradkranz 14. Eine Bohrung 16 in der Nabe erlaubt das Aufstecken des Lenkrades auf eine nicht gezeigte Lenkwelle. Da die Geometrie des Lenkrades im Bereich der anderen, nicht gezeigten Speichen ebenso ausgeführt ist wie die in Figur 1 dargestellte Speiche 12 und da die Speichen gleichmäßig auf dem Umfang verteilt angeordnet sind, ist der in Figur 1 gezeigte Halbschnitt ausreichend, um die Geometrie des Lenkrades in dem für die Erfindung wesentlichen Teil des Lenkrads zu definieren.

Auf den Lenkradkranz 14 des Skeletts wird kein schalenförmiges Spritzgußteil oder geschäumtes Teil aufgesetzt, und der Lenkradkranz 14 wird auch nicht unmittelbar umspritzt oder umschäumt. Vielmehr wird der Lenkradkranz mit einer Zwischenlage 18 aus Weichschaum überzogen, und außenseitig wird auf dem Weichschaum noch ein Leder 20 befestigt.

Die Zwischenlage besteht aus einer im nicht befestigten Zustand ebenen, dünnen Weichschaumplatte, die eine gestanzte Kontur aufweist. Die Dicke dieser flexiblen Platte ist konstant. Nach dem Gießen und Entgraten, gegebenenfalls mechanisch Bearbeiten des Aluminium- oder Magnesium-Druckgußskeletts wird auf den Lenkradkranz 14 die Zwischenlage 18 unmittelbar aufgeklebt.

Anschließend wird in einem darauffolgenden Arbeitsschritt das gestanzte Leder 20 außenseitig auf die Zwischenlage 18 geklebt.

Alternativ ist es auch möglich, das Leder 20 und die Zwischenlage 18 unmittelbar im noch nicht am Lenkrad befestigten Zustand aneinander zu befestigen, so daß sich eine zweilagige, flexible Platte mit einer Oberseite aus Leder und einer Unterseite aus Weichschaum ergibt. Diese Einheit wird dann auf den Lenkradkranz 14 unmittelbar geklebt.

Da die Zwischenlage 18, ebenso wie das Leder 20, sehr dünn und flexibel sowie von konstanter Dicke ist, definiert das Lenkradskelett, genauer gesagt der Kranzbereich des Lenkradskelettes, auch die Außengeometrie des fertig bezogenen Lenkradkranzes, der in Figur 1 zu sehen ist.

Im Bereich der Unterseite des Lenkradkranzes hat das Skelett zahlreiche ca. 1 bis 2 mm breite, schlitzartige Ausnehmungen 22, die quer zum Umfang, d.h. in einer radialen Schnittebene, ihre Haupterstreckungsrichtung haben. Durch die Ausnehmungen 22 verringert sich das Gewicht des Lenkradkranzes 14 erheblich. Die Ausnehmungen 22 sind von außen auch nicht zu ertasten, denn zwischen den Ausnehmungen bleiben radial verlaufende Stege stehen, über die die Zwischenlage 18 gespannt ist.

Bei der in Figur 2 dargestellten Ausführungsform, bei der nur der Lenkradkranz an einer Stelle entfernt von der Speiche dargestellt ist, ist der Lenkradkranz 14' mit einer runden Außengeometrie versehen. Auf der Unterseite hat der Lenkradkranz 14' Ausnehmungen 22', wobei auch auf der Oberseite, abwechselnd zu den unterseitigen Ausnehmungen 22', ebenfalls Ausnehmungen 24 vorgesehen sein können. Auch bei dieser Ausführungsform wird der Lenkradkranz 14' von der Zwischenlage 18 von konstanter Dicke umgeben, wobei die Zwischenlage 18 aus Weichschaum unmittelbar auf das Skelett aufgeklebt ist. Außenseitig ist Leder 20 auf die Zwischenlage 18 geklebt.

Durch die abwechselnden oberseitigen und unterseitigen Ausnehmungen 22', 24 ergibt sich eine leichtere Herstellung beim Druckgußverfahren.

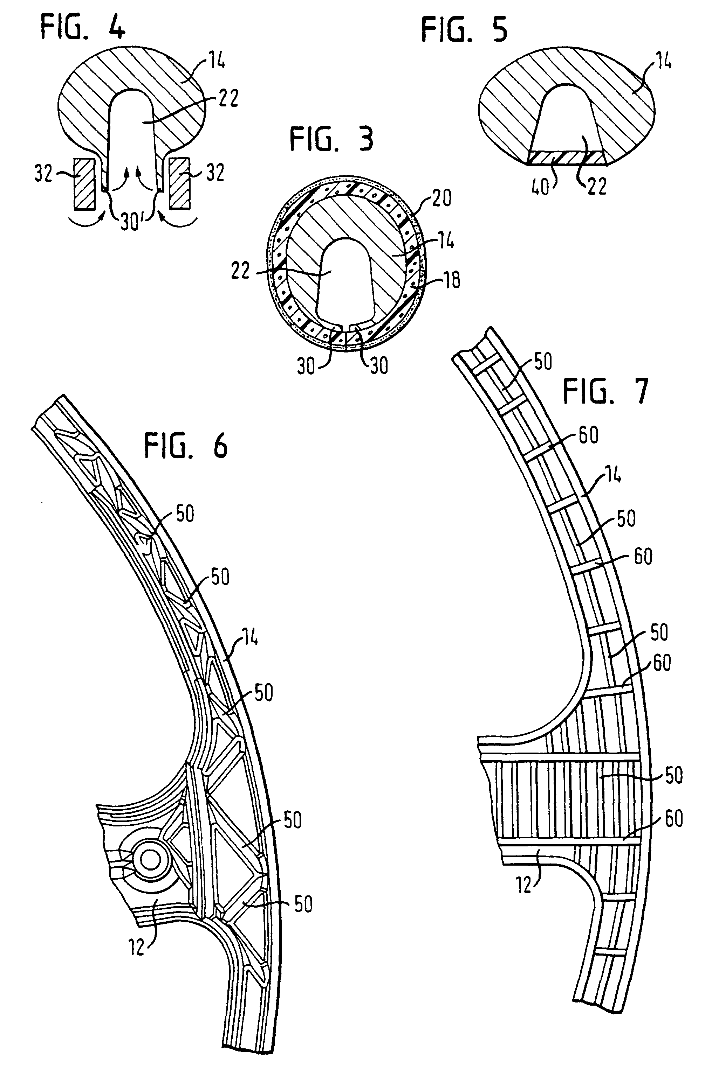

In Figur 3 ist eine dritte Ausführungsform im Querschnitt durch den Lenkradkranz gezeigt. Im Unterschied zu den ersten beiden Ausführungsformen sind hier die Ausnehmungen 22 durch schmale Nasen 30 wenigstens teilweise abgedeckt, auf denen sich die Zwischenlage 18 abstützt. Auf diese Weise können breitere Ausnehmungen vorgesehen werden, die dennoch nicht von außen fühlbar sind. Die Möglichkeit, breitere Ausnehmungen zu verwenden, führt zu einer größeren gestalterischen Freiheit hinsichtlich der Variation des Gewichts und der Vibrationsneigung.

Die Nasen 30 können in einfacher Weise ohne zusätzlichen Arbeitsgang erhalten werden, indem beim Spritzen oder Gießen Nasen 30' am Lenkradkranz 14 angrenzend an die Ausnehmungen 22 angeformt und dann umgeformt werden. In Figur 4 ist ein Lenkrad-Rohling mit angeformten Nasen 30' gezeigt, die etwa radial vom Lenkradkranz abstehen. Nach dem Formen wird der Lenkrad-Rohling in eine Entgratpresse eingelegt, die hier durch zwei Stempel 32 angedeutet ist. Die Stempel 32 legen die Nasen 30' um etwa 90 Grad um, so daß sie sich in der in Figur 3 gezeigten Stellung befinden, in der sie die Ausnehmung überdecken.

In Figur 5 ist eine vierte Ausführungsform im Querschnitt durch den Lenkradkranz gezeigt. Ähnlich wie bei der dritten Ausführungsform sind hier die Ausnehmungen 22 wenigstens teilweise abgedeckt, damit sie von außen nicht fühlbar sind. Abweichend von der dritten Ausführungsform werden allerdings separate Einlegeteile 40 oder Deckel verwendet, die in die Ausnehmungen 22 eingesetzt werden und sich beispielsweise in der sich verengenden Ausnehmung verklemmen. Falls erforderlich, können die Einlegeteile 40 die Ausnehmungen 22 vollständig abschließen.

In Figur 6 ist eine Unteransicht eines Lenkradkranz-Rohlings für ein Lenkrad gemäß einer fünften Ausführungsform gezeigt. Im Unterschied zur ersten Ausführungsform, bei der sich die Stege zwischen den Ausnehmungen 22 radial erstrecken, sind hier sogenannte Kreuzstege 50 vorgesehen, also Stege, die sich mit mindestens einem anderen Steg kreuzen, beispielsweise beim Übergang in den Lenkradkranz.

In Figur 7 ist eine Unteransicht eines Lenkradkranz-Rohlings für ein Lenkrad gemäß einer sechsten Ausführungsform gezeigt. Auch hier werden Kreuzstege 50 verwendet, die aber in Umfangsrichtung verlaufen und sich in regelmäßigen Abständen mit radial verlaufenden Stegen 60 kreuzen.

Sowohl bei der fünften als auch bei der sechsten Ausführungsform kann durch geeignete Anordnung und Dimensionierung der Kreuzstege 50 bzw. der Kreuzstege 50 und der radial verlaufenden Stege 60 einerseits das Gewicht und die Vibrationsneigung des Lenkradkranzes 14 in der gewünschten Weise beeinflußt und andererseits die Größe der entstehenden Hohlräume so eingestellt werden, daß sie nicht mehr von außen fühlbar sind. Gegebenenfalls können zusätzlich die von der dritten Ausführungsform bekannten Nasen oder die von der vierten Ausführungsform bekannten Einlegeteile verwendet werden, um die zwischen den Stegen gebildeten Ausnehmungen abzudecken. Die Stege können dann als Abstützung für die Nasen bzw. Einlegeteile dienen.

## Patentansprüche

1. Verfahren zum Herstellen eines Fahrzeuglenkrads, wobei
ein einstückiges Lenkradskelett, mit einer Nabe (10), wenigstens einer Speiche (12) und einem Lenkradkranz (14; 14') durch Gießen oder Spritzen hergestellt wird,
wobei der Lenkradkranz (14; 14') wenigstens auf seiner Unterseite zahlreiche Ausnehmungen (22; 22'; 24) hat,
**gekennzeichnet durch** folgende Schritte:
a) eine Zwischenlage (18) aus Weichschaum wird unmittelbar so auf den Lenkradkranz (14; 14') geklebt, daß die Zwischenlage (18) die Ausnehmungen (22; 22'; 24) überbrückt und abdeckt und
b) die Zwischenlage (18) wird vor oder nach Schritt a) mit Leder (20) bezogen, indem das Leder (20) unmittelbar auf die Zwischenlage (18) geklebt wird.

2. Verfahren nach Anspruch 1, **dadurch gekennzeichnet, daß** der Lenkradkranz (14; 14') beim Gießen oder Spritzen mit den Ausnehmungen (22; 22', 24) versehen wird, über die die Zwischenlage (18) aus Weichschaum gespannt wird.

3. Verfahren nach einem der vorhergehenden Ansprüche, **dadurch gekennzeichnet, daß** Ausnehmungen (22', 24) an, in bezug auf den Querschnitt des Lenkradkranzes (14'), entgegengesetzten Seiten des Lenkradkranzes (14') vorgesehen sind.

4. Verfahren nach einem der vorhergehenden Ansprüche, **dadurch gekennzeichnet, daß** am Lenkradkranz Nasen (30') angeformt werden, die sich in etwa radialer Richtung, bezogen auf den Querschnitt des Lenkradkranzes, erstrecken.

5. Verfahren nach Anspruch 4, **dadurch gekennzeichnet, daß** die Nasen (30') in einer Entgratpresse (32) umgebogen werden, so daß sie die Ausnehmungen (22; 22') abdecken.

6. Verfahren nach einem der vorhergehenden Ansprüche, **dadurch gekennzeichnet, daß** der Lenkradkranz (14; 14') die Außengeometrie des mit Leder (20) und der Zwischenlage (18) bezogenen Lenkradkranzes (14; 14') definiert.

7. Verfahren nach Anspruch 6, **dadurch gekennzeichnet, daß** die Zwischenlage (18) und der Lederbezug (20) eine konstante Dicke haben.

8. Verfahren nach einem der vorhergehenden Ansprüche, **dadurch gekennzeichnet, daß** das Lenkradskelett als Aluminium- oder Magnesiumdruckgußskelett gefertigt ist.

9. Fahrzeuglenkrad, mit einem einstückigen Lenkradskelett, das eine Nabe (10), wenigstens eine Speiche (12) und einen Lenkradkranz (14; 14') aufweist, wobei der Lenkradkranz (14; 14') wenigstens auf seiner Unterseite zahlreiche Ausnehmungen (22; 22') hat, **dadurch gekennzeichnet, daß** der Lenkradkranz (14; 14') mit einer vorgefertigten Zwischenlage (18) aus Weichschaum und einem Leder (20) bezogen ist, wobei die Zwischenlage (18) unmittelbar am Lenkradkranz (14; 14') und das Leder (20) unmittelbar an der Zwischenlage (18) durch Kleben befestigt sind und die Ausnehmungen (22; 22') von der Zwischenlage (18) und dem Leder (20) überbrückt und abgedeckt sind.

10. Fahrzeuglenkrad nach Anspruch 9, **dadurch gekennzeichnet, daß** die Zwischenlage (18) eine konstante Dicke aufweist.

11. Fahrzeuglenkrad nach einem der Ansprüche 9 und 10, **dadurch gekennzeichnet, daß** auf der Unterseite mehrere Nasen (30) vorgesehen sind, die die Ausnehmungen (22; 22') überdecken.

12. Fahrzeuglenkrad nach einem der Ansprüche 9 bis 11, **dadurch gekennzeichnet, daß** die Aussparungen (22; 22') von Stegen (50, 60) unterteilt sind.

## Claims

1. A method of producing a vehicle steering wheel, in which
a one-piece steering wheel skeleton having a hub (10), at least one spoke (12) and a steering wheel rim (14; 14') is produced by means of casting or injection-molding,
the steering wheel rim (14; 14') having numerous recesses (22; 22'; 24) at least on its lower side,
**characterized by** the following steps:
(a) gluing an intermediate layer (18) made of soft foam directly onto the steering wheel rim (14; 14') such that the intermediate layer (18) bridges and covers the recesses (22; 22'; 24), and
(b) covering the intermediate layer (18) with leather (20) before or after step (a) by gluing the leather (20) directly onto the intermediate layer (18).

2. The method according to claim 1, **characterized in that** during the casting or injection-molding the steering wheel rim (14; 14') is provided with the recesses (22; 22', 24) over which the intermediate layer (18) made of soft foam is stretched.

3. The method according to either of the preceding claims, **characterized in that** recesses (22', 24) are provided on opposite sides of the steering wheel rim (14') with respect to the cross-section of the steering wheel rim (14').

4. The method according to any of the preceding claims, **characterized in that** projections (30') are formed integrally with the steering wheel rim which extend approximately radially with respect to the cross-section of the steering wheel rim.

5. The method according to claim 4, **characterized in that** the projections (30') are bent in a deburring press (32), so that they cover the recesses (22; 22').

6. The method according to any of the preceding claims, **characterized in that** the steering wheel rim (14; 14') defines the outer geometry of the steering wheel rim (14; 14') covered with leather (20) and with the intermediate layer (18).

7. The method according to claim 6, **characterized in that** the intermediate layer (18) and the leather covering (20) have a constant thickness.

8. The method according to any of the preceding claims, **characterized in that** the steering wheel skeleton is made as an aluminum or magnesium diecast skeleton.

9. A vehicle steering wheel, comprising a one-piece steering wheel skeleton having a hub (10), at least one spoke (12) and a steering wheel rim (14; 14'), the steering wheel rim (14; 14') having numerous recesses (22; 22') at least on its lower side, **characterized in that** the steering wheel rim (14; 14') is covered with a pre-fabricated intermediate layer (18) made of soft foam and with a leather (20), the intermediate layer (18) being attached directly to the steering wheel rim (14; 14') by gluing and the leather (20) being attached directly to the intermediate layer (18) by gluing, and the recesses (22; 22') being bridged and covered by the intermediate layer (18) and by the leather (20).

10. The vehicle steering wheel according to claim 9, **characterized in that** the intermediate layer (18) has a constant thickness.

11. The vehicle steering wheel according to either of claims 9 and 10, **characterized in that** a plurality of projections (30) is provided on the lower side, which cover the recesses (22; 22').

12. The vehicle steering wheel according to any of claims 9 to 11, **characterized in that** the recesses (22; 22') are divided by webs (50, 60).

## Revendications

1. Procédé de fabrication d'un volant de direction de véhicule, dans lequel
un squelette de volant de direction d'un seul tenant comportant un moyeu (10), au moins un rayon (12) et une couronne de volant de direction (14 ; 14') est fabriqué par moulage par coulée ou par moulage par injection,
la couronne de volant de direction (14 ; 14') a de nombreux évidements (22 ; 22' ; 24) au moins sur sa face inférieure,
**caractérisé par** les étapes suivantes :
a) une couche intermédiaire (18) en mousse souple est collée directement sur la couronne de volant de direction (14 ; 14') de telle sorte que la couche intermédiaire (18) surmonte et recouvre les évidements (22 ; 22' ; 24), et
b) avant ou après l'étape a), la couche intermédiaire est recouverte de cuir (20) en collant le cuir (20) directement sur la couche intermédiaire (18).

2. Procédé selon la revendication 1, **caractérisé en ce que** lors du moulage par coulée ou du moulage par injection, la couronne de volant de direction (14 ; 14') est pourvue des évidements (22 ; 22' ; 24) sur lesquels est tendue la couche intermédiaire (18) en mousse souple.

3. Procédé selon l'une des revendications précédentes, **caractérisé en ce que** des évidements (22' ; 24) sont prévus sur des côtés opposés de la couronne de volant de direction (14') par rapport à la section transversale de la couronne de volant de direction.

4. Procédé selon l'une des revendications précédentes, **caractérisé en ce que** sur la couronne de volant de direction sont façonnés des ergots (30') qui s'étendent en direction approximativement radiale par rapport à la section transversale de la couronne de volant de direction.

5. Procédé selon la revendication 4, **caractérisé en ce que** les ergots (30') sont recourbés dans une presse d'ébarbage (32) de sorte qu'ils recouvrent les évidements (22 ; 22').

6. Procédé selon l'une des revendications précédentes, **caractérisé en ce que** la couronne de volant de direction (14 ; 14') définit la géométrie extérieure de la couronne de volant de direction (14 ; 14') recouverte par le cuir (20) et par la couche intermédiaire (18).

7. Procédé selon la revendication 6, **caractérisé en ce que** la couche intermédiaire (18) et le revêtement de cuir (20) ont une épaisseur constante.

8. Procédé selon l'une des revendications précédentes, **caractérisé en ce que** le squelette de volant de direction est réalisé sous forme de squelette en magnésium ou aluminium coulé sous pression.

9. Volant de direction de véhicule, comportant un squelette de volant de direction d'un seul tenant qui présente un moyeu (10), au moins un rayon (12) et une couronne de volant de direction (14 ; 14'), la couronne de volant de direction (14 ; 14') ayant de nombreux évidements (22 ; 22') sur sa face inférieure, **caractérisé en ce que** la couronne de volant de direction (14 ; 14') est recouverte d'une couche intermédiaire (18) préfabriquée en mousse souple et d'un cuir (20), la couche intermédiaire (18) étant fixée directement sur la couronne de volant de direction (14 ; 14') et le cuir (20) étant fixé directement sur la couche intermédiaire (18), par collage, et les évidements (22 ; 22') étant surmontés et recouverts par la couche intermédiaire (18) et par le cuir (20).

10. Volant de direction de véhicule selon la revendication 9, **caractérisé en ce que** la couche intermédiaire (18) présente un épaisseur constante.

11. Volant de direction de véhicule selon l'une des revendications 9 et 10, **caractérisé en ce que** sur la face inférieure sont prévus plusieurs ergots (30) qui recouvrent les évidements (22 ; 22').

12. Volant de direction de véhicule selon l'une des revendications 9 à 11, **caractérisé en ce que** les évidements (22 ; 22') sont subdivisés par des traverses (50, 60).
